Europäisches Patentamt

European Patent Office

Office européen des brevets

(19)

(11) Publication number: 0 058 258
A1

(12)

# EUROPEAN PATENT APPLICATION

(21) Application number: 81300595.6

(22) Date of filing: 13.02.81

(51) Int. Cl.³: F 41 G 7/20
F 41 G 7/22, F 02 K 9/80

(43) Date of publication of application:
25.08.82 Bulletin 82/34

(84) Designated Contracting States:
AT BE CH DE FR IT LI LU NL SE

(71) Applicant: Spence, Geoffrey Martin
'Trenoweth' The Firs
Lanner, Nr. Redruth Cornwall(GB)

(72) Inventor: Spence, Geoffrey Martin
'Trenoweth' The Firs
Lanner, Nr. Redruth Cornwall(GB)

(72) Inventor: Hiemae, Karen Marion
1175 East 53rd Street
Chicago Illinois 60615(US)

(74) Representative: Sanders, Peter et al,
Brookes & Martin High Holborn House 52 54 High
Holborn
Loncon WC1V 6SE(GB)

(54) Projectile guidance system.

(57) The system includes a rocket or jet motor at the rear of the projectile (12), means (A) for sensing the position of the projectile relative to a predetermined flight path and for generating an error signal whenever the actual flight path deviates from the predetermined path, and means (B,C) responsive to the error signal for applying electrostatic or magnetic deflection to the efflux from the rocket or jet motor such that the projectile is turned about its centre of mass toward the predetermined path.

Fig.4.

EP 0 058 258 A1

## PROJECTILE GUIDANCE SYSTEM

When firing artillery shells at distant moving targets, the trajectory information needed for correctly aiming the gun to hit the target is computed from ballistic calculations and from data representative of the target position. However, even with radar sighting devices and high-speed computerised control, the chances of successfully hitting a moving target are at present no more than 1 in 10,000.

Known methods used for in-flight control of rocket or jet propelled missiles, include the provision of movable flight surfaces and/or the deflection of a propellant gas stream by either swivelling the jet nozzle or actuating a deflector plate within the efflux. However, all such methods involve complex electro-mechanical control systems and motive power units which take up valuable space and weight. Moreover, an electro-mechanical control system has a finite operating speed which limits the in-flight response of the missile and prevents such methods being used to control spin stabilised projectiles, such as rifle bullets and artillery shells.

The disclosure in British Patent No. 711929 suggests the possibility of controlling the flight path of a rocket by transversely deflecting the charged particles in the efflux of the rocket motor using electrostatic or electromagnetic deflecting fields.

In accordance with the present invention there is provided a projectile guidance system comprising a rocket or jet motor at the rear of the projectile, means for sensing the position of the projectile relative to a predetermined flight path and for generating an error signal whenever the actual flight path deviates from the predetermined path, and means responsive to the error signal for applying magnetic or electrostatic deflection to the efflux from the rocket or jet motor whenever the error signal exceeds a predetermined threshold level such that the projectile is turned about its centre of mass toward the predetermined path.

In one embodiment of the invention the projectile is a spin stabilised projectile, such as an artillery shell or rifle bullet, and the deflecting field is applied periodically in synchronism with the rotation of the projectile.

The deflecting field may be applied transverse to the efflux between at least one pair of electrodes disposed on opposite sides of the longitudinal axis of the projectile, or it may be applied progressively to the efflux along the longitudinal axis such that the charged particles in the efflux are brought to a focus at a point displaced from the axis.

A guidance system embodying the invention is particularly adapted for use in a terminal guidance system where the projectile is launched toward a target illuminated with a beam of radiation such as a laser. In this case, the predetermined flight path is represented by the beam reflected from the target.

By way of example only, two embodiments of the invention will now be described with reference to the accompanying drawings in which:-

Fig. 1 is a diagrammatic sectional view of an artillery shell embodying the present invention,

Fig. 2 is a circuit diagram of a guidance control circuit for use in the shell of Fig. 1,

Fig. 3 is a graphical representation to illustrate the operation of the circuit of Fig. 2, and

Fig. 4 is a schematic circuit diagram of an alternative control circuit.

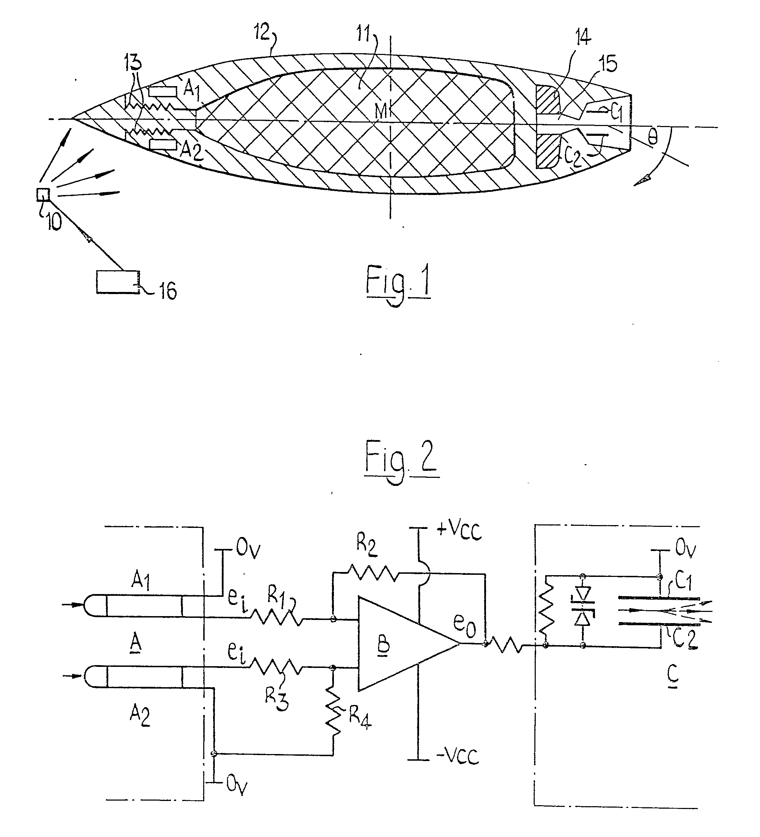

In the drawings, Fig. 1 shows a terminally guided, gyroscopically stabilised artillery shell which is guided onto a target 10 illuminated by a laser 16.

The nose of the shell includes conventional proximity or contact fuses 13, and the body 12 of the shell includes a cavity filled with an explosive charge 11.

The rear section of the shell is provided with a small rocket motor which essentially consists of a charge of solid propellant 14 located in a second cavity of the shell, the cavity communicating with the open tail end of the shell through a venturi 15. When the shell is fired, the propellant charge 14 is ignited by the propellant gases in the breach of the firing weapon, and the resulting jet efflux passes through the venturi 15 to emerge from the tail end of the shell. The amount of charge 14 and its burn rate are selected to provide a sufficient burn time for the particular guidance required.

The guidance control circuit for the shell is extremely simple and is illustrated in Fig.2. It includes a pair of sensing elements $A_1$, $A_2$ located in the nose of the shell as shown in Fig.1., and also a pair of parallel conductive plates C1,C2 located in the tail of the shell as shown in Fig.1.

The control circuit can be sub-divided into three main sections. The first section A includes the sensing elements $A_1$ and $A_2$. The second section B consists essentially of a differential amplifier, and the third section C includes the control (deflector) plates C1 and C2.

The target 10 (Fig.1) is illuminated by a narrow beam of radiation, such as a laser, and the sensing elements $A_1$, $A_2$ respond to the radiation energy reflected from the illuminated target. The elements may, for example, comprise sensing diodes.

Assuming both sensing elements produce positive signals when responding to the reflected energy, the differential amplifier B will amplify an input signal $e_i$ from sensor $A_1$ such that the output error voltage $e_o$ is given by:

$$e_o = -\left( \frac{R_2}{R_1 + \text{source resistance}} \right) e_i \text{ where } \frac{R2}{R1} \text{ repre-}$$

sents the amplification factor.

The output voltage swing is therefore negative charging plate C2 negatively, and plate C1 positively, up to a preselected maximum voltage $V_{cc}$.

Since the shell is spin stabilised, and is therefore rotating about its longitudinal axis, the sensing element $A_1$ will pick up the reflected radiation from the target during only a small proportion of each revolution of the shell. In practice, unless the nose of the shell is pointing directly at the target so that both the sensing elements are continuously illuminated by the radiation, one of the sensing elements will provide an output for an interval during the first $180^{\circ}$ of rotation in each revolution while the second element will provide an output for an interval during the remaining $180^{\circ}$ of rotation.

When the sensing element $A_2$ responds to the reflected energy, the output voltage $e_o$ of the differential amplifier will be given by:

$$e_o = \left( \frac{R2}{R_3 + \text{source resistance}} \right) e_i$$

where $\frac{R_2}{R_3}$ equals the amplification factor.

The output voltage swing is therefore positive, charging C2 positively, and C1 negatively, up to the voltage $V_{cc}$.

The effect of charging the plates C1, C2 will be to draw the ionised molecules of the jet efflux toward the positively charged plate. The proportion of ionised molecules in the exhaust gases increases with temperature, and is also dependant on the composition of the propellant. If necessary, the proportion could be further increased by conventional ionization techniques. The overall effect of the charged plates will therefore be to swing the efflux through an angle $\theta$ as shown in Fig. 1, $\theta$ being proportional to the quantity of charge on the plates.

It will be appreciated that, although in the above case the plates C1 and C2 are alternatly charged positively, the two plates will have interchanged their positions around the longitudinal axis of the shell so that, throughout the shell's rotation, the deflection of the jet efflux will always be such that the resultant applied vector turns the shell about its centre of mass M towards the target.

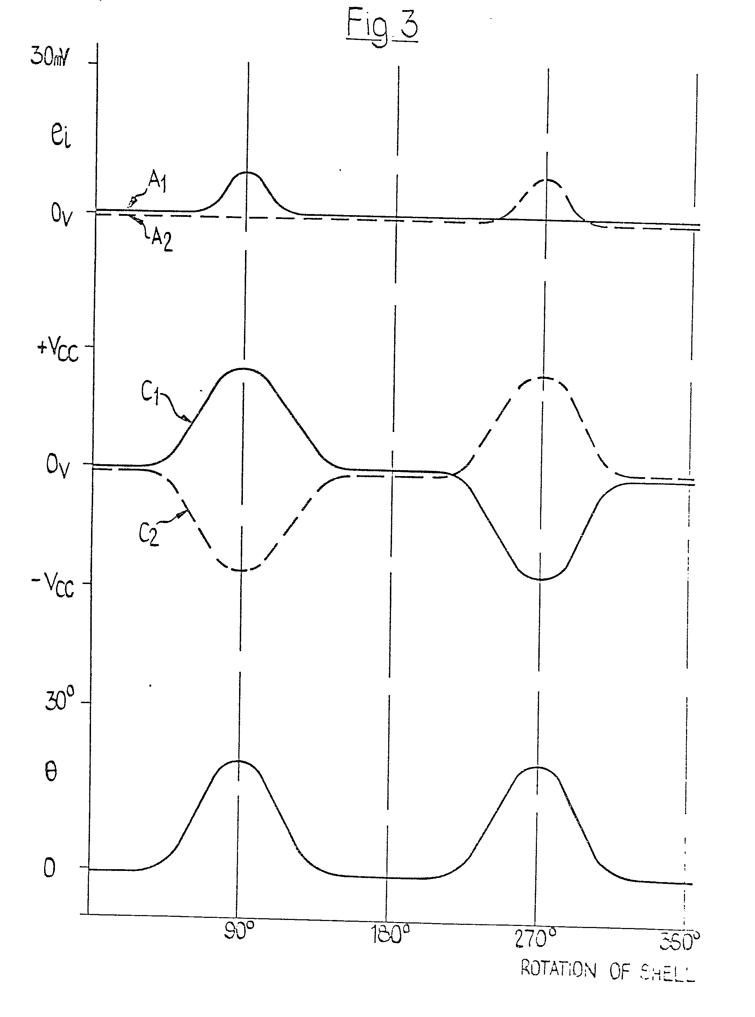

The above-described system provides on/off control by intermittently applying a corrective force to the shell. The magnitude of the force is however fixed. In particular it is independent of the magnitude of the error signal $e_o$. The efflux will be deflected through a fixed angle to one side or the other of the longitudinal axis depending on the polarity of the error signal. The operation of the system is graphically illustrated in Fig.3. The three graphs are based on experimental results. In graph (a), the output $e_i$ from sensing element $A_1$ peaks when the shell has rotated $90^o$, while the corresponding output $e_i$ from $A_2$ peaks after $270^o$ of rotation. The peak voltage in each case is less than 10 mV. At each peak, the plates C1,C2 become oppositely charged to the maximum value of + or - $V_{cc}$ regardless of the magnitude of the peaks. This is shown by graph (b). The value of $V_{cc}$ is in the region of 500 volts, and this voltage is derived in any convenient manner from an internal battery. The final graph (c) shows that the efflux will be turned through something like $20^o$ each time the plates become charged.

The circuit could be easily adapted to provide proportional control in which the quantity of the charge on the plates is varied in accordance with the magnitude of the error signal. In this case $\theta$ would also vary in accordance with the error signal.

When $e_i A_1 = e_i A_2$ there is no output $e_o$ due to the common rejection ratio of the amplifier B. Accordingly, the efflux is not deflected and the shell will continue to travel along a straight path toward the target.

It will be apparent that the invention can be readily integrated with more advanced electronic guidance command/control systems and that it may be used not only in shells but in any type of projectile from small rifle bullets to large missiles.

Where the projectile being controlled is not continuously rotating, or is not rotating at a sufficiently high speed, it would be necessary to include at least two mutually perpendicular pairs of opposing plates in order to provide directional control in more than one plane.

Instead of charging plates C1,C2 electrostatically, it would be possible to substitute the poles of an electro-magnet for the plates and modify the circuit to provide magnetic instead of electrostatic deflection.

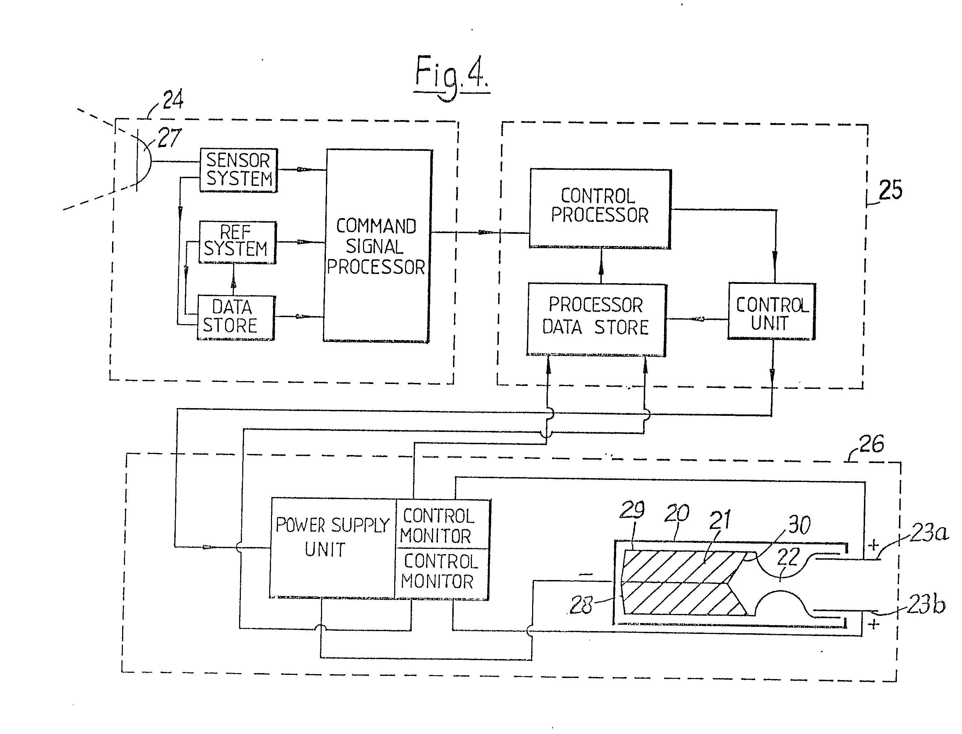

One alternative embodiment of the invention is illustrated in Fig. 4. As in the first embodiment, the rear section of a 155mm artillery shell is provided with a jet motor. In this embodiment, however, the electrostatic or electromagnetic field is applied between two electrodes spaced apart along the longitudinal axis of the shell. This means that the field acts on the charged particles for a longer period, increasing the resultant vector force for a given power input, and can therefore provide a greater turning moment. Moreover, the voltage gradient between the electrodes can accelerate the charged particles so that varying the strength of the field can also increase or decrease the thrust of the motor. Directional control is achieved by selectively focusing the charged particles on one side or the other of the longitudinal axis.

In particular, the jet propellant may itself act as one electrode for the electrostatic field, and at least one pair of control electrodes are then disposed on opposite sides of the jet efflux, the control electrodes being of the same polarity but of opposite polarity to that of the propellant electrodes. The control electrodes focus the stream of charged particles, the focal point being offset from the longitudinal axis whenever the relative magnitudes of the potential of the two control electrodes differ. This will produce a turning moment about the centre of mass of the shell, as in the first embodiment.

In Fig. 4, the jet motor 20 is shown schematically with a negative propellant electrode 21, a venturi 22, and a pair of positive control electrodes 23a, 23b, disposed on opposite sides of the jet efflux. The electrodes 23a, 23b are preferably arcuate electrodes disposed such that, when they have equal potential, the charged particles in the efflux are brought to a focus on the longitudinal axis of the shell.

Referring now to the overall guidance system shown in Fig. 4, the system comprises three primary modules. These are the sensor/command unit 24, a control unit 25, and a power actuator unit 26.

The sensor/command unit 24 includes an infrared sensor 27, or similar pick-up device, which feeds in a signal to a sensor system each time the sensor detects incident radiation from a beam of radiation defining a predetermined flight path. The beam may, for example, be a laser beam reflected from a target. Since the shell is spinning about its longitudinal axis, the sensor automatically scans through $360^\circ$ at a rate dependent on the speed of rotation. The output signal from the sensor system is fed to a command signal processor and also to a data store. A reference system continuously scans the data store to monitor phase changes in the sensor output and thereby provide a clock signal related to the orientation of the shell. This clock signal is fed together with the directional signal from the sensor to a command signal processor.

The signal processor compares the reference and sensor inputs to derive an error command signal dependent on the actual deviation of the projectile from its predetermined flight path. The error signal contains data
representing the magnitude of the vector required to
turn the shell into the flight path, the direction in
which the force is to be applied relative to the axis
of the shell, the orientation of the shell, and the
period for which the force is required. For example, a
drop in the rotational speed of the shell will appear
as a change in the period of the clocking signal and
will produce a corresponding increase in the period for
which the corrective force is applied.

The error signal is fed to a control processor of
the control unit 25. The control processor also receives an input from a processor data store which is fed
with data monitored from the motor unit. This monitored
data consists of temperature, pressure, and flame front
measurements fed back from a pair of control monitor
units, in the power actuator unit 26. The feedback data
is compared with stored data so that, if necessary, the
error signal can be adjusted to ensure that the signal
fed to the power unit provides the necessary correction
to the flight path of the shell. The flame front
measurements monitor impedance changes between the
electrode 21 and the electrodes 23 as the propellant
electrode 21 burns back toward the rear wall 28 of the
combustion chamber 29. This impedance increases as
the electrodes are spaced further apart, and the required deflecting force will vary according to the position of the flame front 30.

The data fed back from the control monitors can also be used to provide a speed control for the shell. This is achieved by varying the thrust of the jet motor using the voltage gradient between electrodes 21 and 23 to control the acceleration of the charged particles in the efflux. In particular, if the shell is correctly aimed at its target, it may be allowed to cruise at a reduced speed and thereby conserve the propellant to provide increased range. Accordingly, the error command signal from the control unit is fed to a power supply of the power actuator unit, and the power supply varies the voltage between the propellant electrode 21 and the control electrodes 23, and/or between the control electrodes 23a, 23b so that the motor thrust is selectively increased, decreased, and/or deflected to provide a vector force which turns the shell about its centre of mass toward the predetermined flight path.

As in the first embodiment, the potentials of the plates 23a, 23b are varied periodically in synchronism with rotation of the shell so that although the plates interchange positions after each half revolution, the resulting vector force is always such that the shell is turned about its centre of mass toward the predetermined flight path.

C L A I M S

1.    A projectile guidance system comprising a rocket or jet motor at the rear of the projectile, means for sensing the position of the projectile relative to a predetermined flight path and for generating an error signal whenever the actual flight path deviates from the predetermined path, and means responsive to the error signal for applying magnetic or electrostatic deflection to the efflux from the rocket or jet motor such that the projectile is turned about its centre of mass toward the predetermined path.

2.    A system according to Claim 1, in which the projectile is spin stabilised and the deflecting field is applied periodically in synchronism with the rotation of the projectile.

3.    A system according to Claim 2, in which the deflecting field is applied transverse to the efflux between a pair of electrodes disposed on opposite sides of the longitudinal axis of the projectile.

4.  A system according to Claim 3, in which the deflecting field is applied alternately in opposite directions between the electrodes, the alternating period being substantially equal to half a revolution of the projectile.

5.  A system according to Claim 1/or Claim 2, in which the deflecting field is applied progressively to the efflux along the longitudinal axis of the projectile such that the charged particles of the efflux are brought to a focus at a point displaced from the said axis.

6.  A system according to Claim 5, in which the deflecting field is applied between a first electrode of one polarity and at least one pair of second electrodes of the opposite polarity, the first and second electrodes being spaced apart in the direction of flow of the efflux.

7.  A system according to Claim 6, in which the projectile is spin stabilised and the potential difference between the or each pair of second electrodes is varied periodically in synchronism with the rotation of the projectile.

8.  A system according to Claim 6 or Claim 7 in which the first electrode is the propellant of the jet motor.

9.   A system according to any one of the Claims 5 to 8 in which the temperature, pressure and flame front of the jet motor are monitored, and in which the monitored data is fed back to a control signal processor for comparison with stored data, the error signal being corrected in response to the resulting output.

Fig. 1

Fig. 2

Fig 3

2/3

0058258

Fig.4.

## DOCUMENTS CONSIDERED TO BE RELEVANT

| Category | Citation of document with indication, where appropriate, of relevant passages | Relevant to claim |
|---|---|---|
| X | <u>GB - A - 1 042 820</u> (GENERAL ELECTRIC)<br>* Figures 3,5 *<br>-- | 1,3 |
| X | <u>FR - A - 1 047 691</u> (M. KADOSCH et al.)<br>* Whole document *<br>-- | 1 |
| DX | <u>GB - A - 711 929</u> (M. KADOSCH)<br>* Whole document *<br>-- | 1 |
| X | <u>US - A - 4 013 245</u> (L.F. VAN BUSKIRK)<br>* Column 3, lines 29-36 *<br>-- | 2 |
| X | <u>FR - A -2 001 424</u> (MESSERSCHMITT)<br>* Whole document *<br>-- | 2 |
| X | <u>FR - A - 2 326 676</u> (INSTITUT FRANCO-ALLEMAND DE RECHERCHES DE SAINT-LOUIS)<br>* Claim 9 *<br>-- | 2 |
| A | <u>DE - B - 1 092 313</u> (I.V. MAYDELL) | |
| A | <u>DE - A - 2 520 238</u> (MESSERSCHMITT) | |
| A | <u>US - A - 3 642 233</u> (J.P. BEZERIE)<br>---- | |

**CLASSIFICATION OF THE APPLICATION (Int. Cl.³)**

F 41 G 7/20
          7/22
F 02 K 9/80

**TECHNICAL FIELDS SEARCHED (Int. Cl.³)**

F 41 G
F 42 B
F 02 K

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-10-1981 | CHAIX DE LAVARENE |

EPO Form 1503.1